(19) Europäisches Patentamt

European Patent Office

Office européen des brevets

(11) **EP 2 359 022 B1**

(12) **EUROPEAN PATENT SPECIFICATION**

(45) Date of publication and mention
of the grant of the patent:
**13.02.2013 Bulletin 2013/07**

(21) Application number: **09796079.3**

(22) Date of filing: **09.12.2009**

(51) Int Cl.:
***F16D 65/18*** (2006.01)

(86) International application number:
**PCT/IB2009/055613**

(87) International publication number:
**WO 2010/067313 (17.06.2010 Gazette 2010/24)**

(54) **BRAKE CALIPER PARKING DEVICE**

BREMSSATTELPARKVORRICHTUNG

DISPOSITIF DE STATIONNEMENT D'ÉTRIER DE FREIN

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.12.2008 IT MI20082205**

(43) Date of publication of application:
**24.08.2011 Bulletin 2011/34**

(73) Proprietor: **Freni Brembo S.p.A.
24035 Curno (Bergamo) (IT)**

(72) Inventors:
• **CANOVA, Walter
I-24010 Sorisole, Bergamo (IT)**
• **TERUZZI, Andrea
I-24061 Albano S. Alessandro, Bergamo (IT)**

(74) Representative: **Crippa, Paolo Ernesto et al
Jacobacci & Partners S.p.A.
Via Senato, 8
20121 Milano (IT)**

(56) References cited:
**EP-A- 2 093 450          DE-A1- 3 146 818
DE-A1-102006 012 440     US-A1- 2007 105 684**

**Description**

The object of the present invention is a parking device of a brake caliper for a disc brake of a vehicle.

The known brake calipers provided with parking systems comprise an actuating lever manually actuatable by the vehicle's driver and usually connected to the hand brake lever through one or more cables. The actuating lever is connected to an actuating shaft associated to a main plate bearing shaped rolling seats adapted to at least partially receive spheres and to allow the rolling thereof therein.

Such brake calipers further comprise a reaction plate integral to a caliper body of the brake caliper and which is adapted to cooperate with the main plate. The reaction plate, in fact, also has shaped rolling seats adapted to receive the above-mentioned spheres and to allow the rolling thereof therein. The main plate and the reaction plate are positioned so that the respective seats thereof for the spheres are arranged in front of one another, and so that the spheres can thereby concomitantly roll in the rolling seats of both. The main plate and the reaction plate rolling seats are shaped so that, following the primary plate rotation, the spheres follow a rolling path such as to move the main plate and the reaction plate one away from the other. In this manner, by actuating the actuating lever, the primary plate, connected to the latter through the actuating shaft, rotates-translates, thus moving away from the reaction plate.

The main plate is operatively connected to a piston adapted to slide relative to the caliper body so that the roto-translation of the main plate causes the piston translation in the caliper body. Upon translating, the piston pushes a pad against a disc of the disc brake, thus clamping it and carrying out in this manner the parking braking action.

The profiles of the main plate and the reaction plate rolling seats intended to receive the spheres can have a number of configurations. By the term "profile of the seats" it is meant the trend of the curve that is obtained by sectioning the seats with a curved surface having the rolling path as a generatrix, and which develops along the depth direction of the rolling seats, and subsequently by laying out the thus-obtained curve onto a plane.

The rolling seats proposed in the parking devices according to the prior art can have rectilinear, logarithmic, circle arc, ellipse arc profiles, or combinations thereof. Such profiles, each of which has special advantages, have anyhow the drawback of not providing to the vehicle's driver, who controls the parking device usually acting on the hand brake lever within the vehicle's interior compartment, the precise perception of the occurred clamping of the brake disc by the pad. Consequently, it may occur that the parking braking action is not completely performed, with possible risks of accidental movements of the vehicle.

Documents DE 31 46818, DE 10 2006 012 440, US 2007-0105684, EP 2 093 450 show known solutions of this type.

Therefore, object of the present invention is to provide a parking device such as to provide to the vehicle's driver the perception of the progression status of the parking braking action performed by the same device, in particular of the occurred clamping of the brake disc, that is of the fact that the parking braking action has been successfully completed.

These and other objects are achieved by a brake caliper parking device according to claim 1 and a brake caliper according to claim 14. Each dependant claim defines a possible embodiment of the parking device or the brake caliper.

In order to better understand the invention, and appreciate the advantages thereof, some exemplary, non-limiting embodiments thereof will be described herein below, with reference to the annexed Figures, in which:

Fig. 1 is a perspective schematic view with detached parts of a brake caliper provided with a parking device according to the invention;
Fig. 2 is a partially sectional perspective schematic view of the brake caliper in Fig. 1;
Fig. 3 is a sectional schematic view of the brake caliper in Fig. 1;
Fig. 4 is a perspective schematic view of a component of the brake caliper in Fig. 1;
Fig. 5 is a further schematic view of the brake caliper component in Fig. 4;
Fig. 6 is a perspective schematic view of a further component of the brake caliper in Fig. 1;
Fig. 7 is a further schematic view of the brake caliper component in Fig. 6;
Fig. 8 is a perspective and sectional schematic view according to the surfaces A and B of the brake caliper components in Figures 4 and 6, respectively, in a particular use condition according to a possible embodiment of the invention;
Fig. 9 is a schematic view in a Cartesian plane of the section according to the line C-C, laid out in a plane, of the brake caliper component in Fig. 5 and/or the section according to the line D-D, laid out in a plane, of the brake caliper component in Fig. 7 according to a possible embodiment of the invention;
Fig. 10 is a qualitative representation in a Cartesian plane of the correlation between some functional parameters of the brake caliper according to a possible embodiment of the invention.

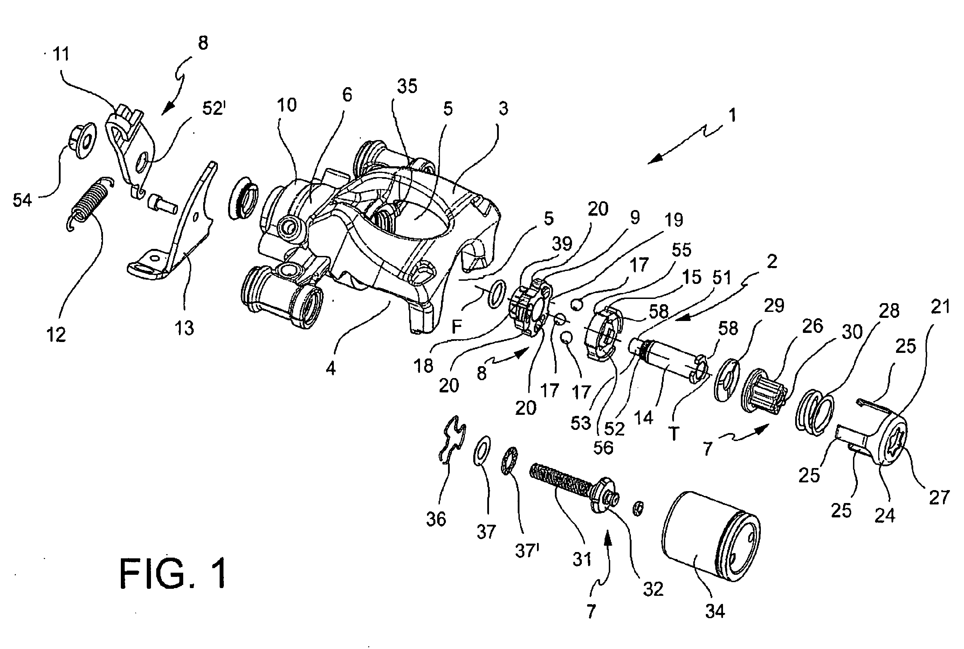

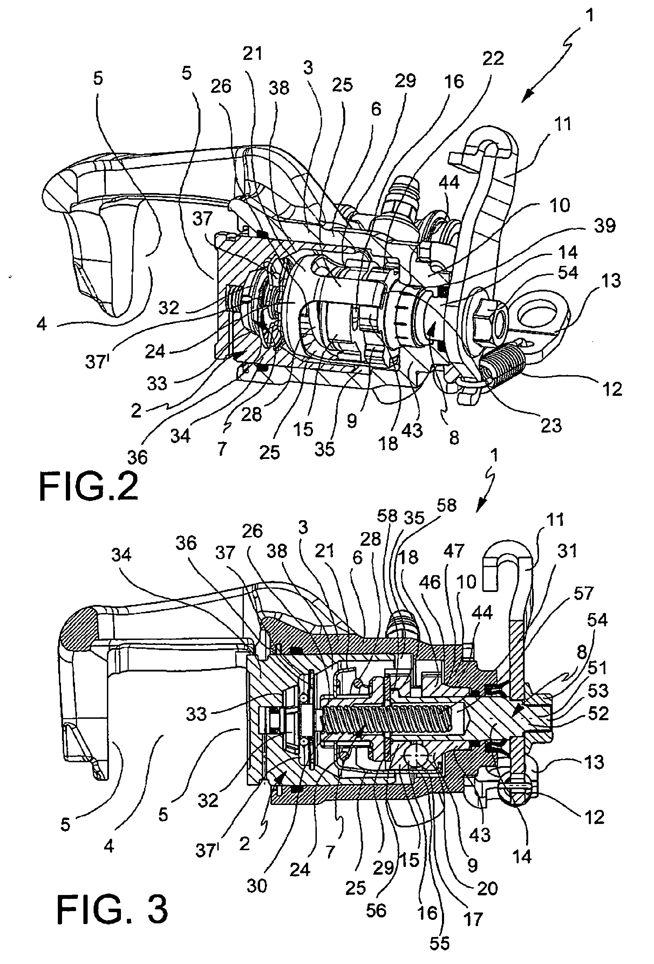

With reference to the Figures 1-3, a brake caliper for a disc brake of a vehicle is generally indicated with the reference numeral 1. The brake caliper 1, preferably, but not necessarily, of the floating type, comprises a parking device 2 adapted to implement a parking braking action of the vehicle, controllable by the vehicle's driver via a control member (not shown in the Figures), for example, the lever of the so-called hand brake, connectable to the parking device 2. Preferably, the caliper 1 is so shaped as to be able to perform, besides the parking braking action, also the service braking action, that is the braking action which is applied to the moving vehicle, for example, by actuating the brake pedal.

The brake caliper 1 comprises a caliper body 3 defining a disc space 4 adapted to at least partially receive a brake disc (not shown in the Figures) associated to a vehicle wheel. On at least one, preferably on both sides of the disc space 4, the caliper body 3 defines pads seats 5 adapted to receive one or more pads (not shown in the Figures) adapted to engage the brake disc, by clamping it with a clamping force $F_s$ and carrying out in this manner the braking action.

The parking device 2 comprises a main support body 6 which is preferably formed in a single piece with the caliper body 3 but which, alternatively, can be distinct therefrom and connectable thereto.

The parking device 2 comprises pushing means 7 adapted to exert a pushing action on at least one of the pads of the caliper 1, so that the latter engages the brake disc.

The parking device 2 further comprises actuating means 8 adapted to actuate the pushing means 7 so that the latter exert the above-cited pushing action on the pad.

Such actuating means 8 comprise a main plate 15, advantageously able to perform movements, in particular roto-translations, relative to the main support body 6, and a reaction plate 18, preferably integrally connected upon rotating and upon translating to the main support body 6. The main plate 15 and the reaction plate 18 are adapted to cooperate with one another, according to modes which will be detailed below.

In accordance with an embodiment, the parking device 2 actuating means 8 comprise an actuating lever 11 connectable, for example, to the hand brake lever within the vehicle. The actuating lever 11 is connected to the main support body 6 in such a manner as to be able to perform rotations, and preferably slight translations, relative thereto. The actuating lever 11 can pass from a rest position, corresponding to the lowered hand brake position (absence of parking braking action), to an operative position, corresponding to the lifted hand brake position (presence of the parking braking action). To the actuating lever 11, a return spring 12 can be connected, which is adapted to elastically urge the actuating lever towards the rest position. Such return spring 12 acts between the actuating lever 11 and the main support body 6 or a device portion integral thereto, for example, a contrast member 13 removably connected to the main support body 6.

In accordance with an embodiment, the actuating means 8 further comprise an actuating shaft 14 able to rotate and/or slide relative to the main support body 6, preferably connected or connectable in an integral manner to the main plate 15.

The actuating shaft 14 is advantageously integrally connected upon rotating to the actuating lever 11. With the aim of implementing such integral connection upon rotating with the actuating lever 11, the actuating shaft 14 can comprise a connection portion 51 having, for example, a knurled portion 52, adapted to implement a shape-connection with a corresponding connection seat 52' of the actuating lever 11, and a threaded portion 53, adapted to the threaded connection, for example, with a nut 54 adapted to avoid relative slidings between the actuating lever 11 and the actuating shaft 14.

At least one between the main plate 15 and the reaction plate 18 comprises one or more, preferably three, rolling seats adapted to at least partially receive rolling bodies, preferably spheres, 17 and to make them to roll therein along rolling paths. According to a possible embodiment, both the plates 15 and 18 comprise rolling seats. In particular, the main plate 15 comprises rolling seats 16, and the reaction plate 18 comprises rolling seats 20. Advantageously, to each rolling seat of one between the main plate 15 and the reaction plate 18, an opposite rolling seat corresponds of the other one between the main plate 15 and the reaction plate 18. I n this way, the corresponding and opposite seats of the main plate 15 and the reaction plate 18 are able to receive therein the same sphere 17 and to make it to roll along the respective rolling paths.

With further advantage, the main plate 15 rolling seats 16 and the reaction plate 18 rolling seats 20 are shaped so that, when the spheres 17, interposed between the plates 15 and 18, concomitantly roll in such rolling seats 16 and 20 along the respective rolling paths according to specific directions, the main plate 15 and the reaction plate 18 are urged to move away. Such rolling can be triggered by the main plate 15 rotation, in turn actuatable by the actuating lever 11 through the actuating shaft 14. Consequently, the actuating shaft 14 - main plate 15 unit roto-translates relative to the reaction plate 18, advantageously connected in an integral manner to the main support body 6.

In accordance with an embodiment, the reaction plate 18 forms means for the connection with a support device 21 adapted to support the pushing means 7. For example, the reaction plate 18 can form radially projecting portions 22 defining connection seats 23 therebetween, for the connection of the reaction plate 18 to the support device 21, for example, with elastic legs 25 of a cage 24, snap-connectable to the reaction plate 18. In this manner, the cage 24 and the reaction plate 18 result to be integrally connected one to the other upon rotating and upon translating.

Advantageously, the cage 24 supports a pushing shaft 26 operatively connected to the main plate 15. Such pushing shaft 26 is free to slide relative to the cage 24, and is preferably integral thereto upon rotating. To this aim, the cage 24 defines a shaft seat 27 having a profile essentially complementary to the pushing shaft 26 profile, for example, a profile provided with a plurality of lobes, adapted to implement a shape-coupling between the pushing shaft 26 and the cage 24. Between the cage 24 and the pushing shaft 26, a counter spring 28 can act, which is so arranged as to elastically urge the pushing shaft 26 towards the main plate 15.

As it shall be appreciated by those skilled in the art, the roto-translation of the main plate 15, which is triggered according to the described modes by the actuating lever 11 rotation, translates in a pushing shaft 26 translation, which translates, moving closer to the disc space 4.

With the aim of reducing the friction torques due to the relative rotations between main plate 15 and pushing shaft 26, anti-friction means can be arranged between the latter, for example, a Teflon-coated fifth wheel 29.

In accordance with a possible embodiment, the pushing shaft 26 defines a threaded seat 30 adapted to receive a threaded pin 31. At the threaded pin 31 end facing the disc space 4, a preferably frusto-conical pushing head 32 can be provided, adapted to fit in a corresponding head seat 33 of a piston 34 which is free to slide within a piston seat 35 defined by the main support body 6. The pushing head 32 is advantageously kept pressed in the head seat 33 by a pushing spring 36 acting between the pushing head 32 and the same piston. Thanks to such configuration, the pushing shaft 26 translation translates in a piston 34 translation, to which at least one of the above-cited pads is operatively connected, which is thus pressed against the brake disc received in the disc space 4.

The threaded pin 31 has the advantageous function of recovering the clearances due to the pads wear, compensated by rotations thereof within the pushing shaft 26 threaded seat 30. Consequently, the pushing head 32 can rotate relative to the pushing spring 36 and the piston 34.

According to a possible embodiment, with the aim of reducing the friction torques due to the relative rotations between pushing spring 36 and pushing head 32, anti-friction means are interposed between the latter, for example, a washer 37 and/or a bearing 37'.

With the aim of reducing the parking device 2 overall dimensions, the actuating shaft advantageously comprises a hole 57 adapted to at least partially receive the threaded pin 31.

Advantageously, the piston 34 defines a recess 38 therein. Such recess 38, besides at least partially receiving the pushing means 7, is adapted to be filled with pressurized fluid, so that the piston 34 can be actuated also hydraulically, that is, for the service braking action, actuatable, for example, via a pressure on the brake pedal.

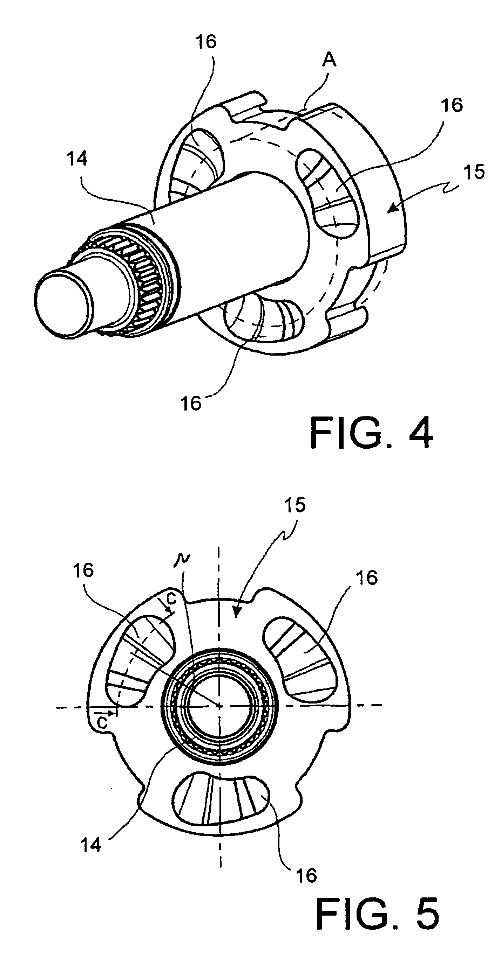

With reference to the Figures 4 to 10, the plates rolling seats 16 and 20 comprise an operational zone 70 shaped so that the rolling of the rolling bodies 17 therein along the rolling paths translates in a relative movement between main plate 15 and reaction plate 18 adapted to actuate the pushing means 7, for example, the relative rototranslation movement between main plate 15 and reaction plate 18 described before, which can be triggered, for example, by actuating the actuating lever 11. By operational zone is meant that zone of the rolling seats in which the actual rolling of the rolling bodies 17 along the rolling paths takes place, which rolling is intended to implement the cooperation between main plate 15 and reaction plate 18, from which the brake disc clamping results. Preferably, but not necessarily, the rolling seats can further comprise a rest zone 71, distinct from the operational zone 70, adapted to house the rolling bodies 17 when the parking braking action is inactive, for example, when the hand brake lever is in the lowered position.

The rolling seats operational zones 70 have profiles which comprise a first profile length 72 and a second profile length 73 having a discontinuity point 74 in common. According to an embodiment, the rolling of the rolling bodies 17 along, in the order, such first 72, and second 73 profile lengths of the operational zones 70, translates in the previously described relative moving away movement between the main plate 15 and the reaction plate 18.

Advantageously, the slope of the operational zone 70 first profile length 72 is different from the second profile length 73 slope in such discontinuity point 74. By the term "profile slope" is meant the slope of the straight line tangent to the profile in a given point. From a mathematical point of view, the slope is correlated to the first derivative of the curve representative of the profile in a given point. Such conformation of the operational zone 70 profile is particularly advantageous, since following the rolling bodies 17 passing through such discontinuity point 74 of the operational zones 70 profiles, a force $F_L$ outwardly transmitted by the device 2, for example, via the actuating lever 11, which is perceived by the user, for example, on the hand brake lever, undergoes an abrupt variation, compared to a clamping force $F_S$ on the brake disc which undergoes reduced variations. Such advantageous technical effect can be exploited in order to provide the user with the perception of one or more points representative of the progression status of the parking braking action, for example, the piston 10 and pad stroke relative to the main support body 6 and the brake disc.

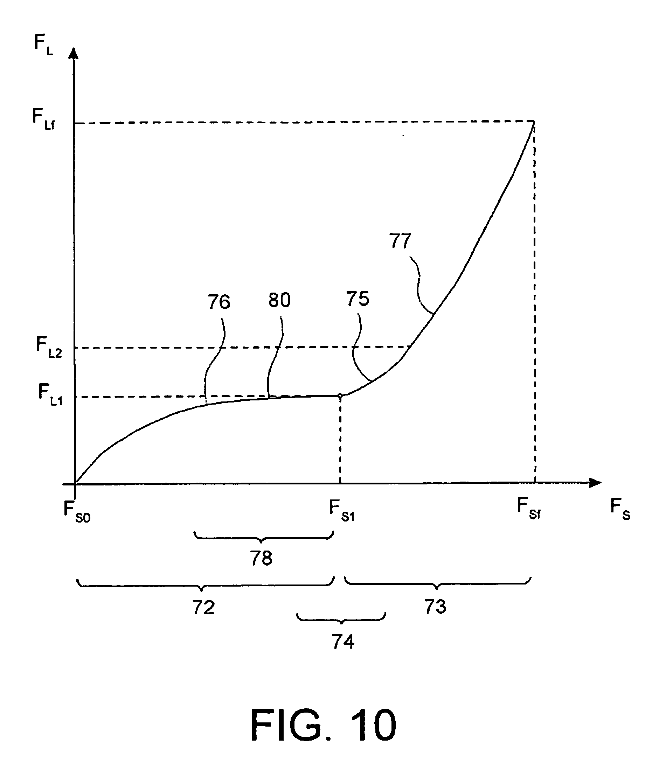

In accordance with an embodiment, the rolling of the rolling bodies 17 on the first profile length 72 is adapted to implement a clamping step 76 of the brake disc, in which the clamping force $F_S$ passes from a first contact value $F_{s0}$ which is essentially null to a first intermediate clamping value $F_{s1}$, (Fig. 10). The first contact value $F_{s0}$ is reached in the moment just before the pad, approaching to the brake disc, first contacts the latter. The first intermediate clamping value $F_{s1}$ is reached by further pressing the pad against the disc and, advantageously, is suitable to ensure the parking. Instead, the rolling of the rolling bodies 17 on the second profile length 73 is adapted to implement a completed clamping step 77 of the brake disc, in which, although the parking has already been performed, the clamping force $F_S$ can optionally further pass from the first intermediate clamping value $F_{s1}$ to a further clamping value $F_{sf}$. Thanks to the advantageous conformation of the operational zone 70 profile, in the proximity of the first intermediate clamping value force $F_{s1}$, the transmitted force $F_L$ undergoes an abrupt variation 75, which provides the user with the perception of the fact that the parking braking action has been successfully completed.

In accordance with an embodiment, such abrupt variation 75 of the transmitted force $F_L$ is positive. In other words, as the clamping force $F_s$, increases while passing through the discontinuity point 74, the perceived force $F_L$ abruptly passes from a first value $F_{L1}$ to a second value $F_{L2}$ higher than the first one. To this aim, the slope of the operational zone 70 second profile length 73 is advantageously higher than the slope of the operational zone 70 first profile length 72 at the discontinuity point 74. According to a possible embodiment, the difference between the slope of the operational zone 70 second profile length 73 and the slope of the operational zone 70 first profile length 72 at the discontinuity point 74 is about 5°.

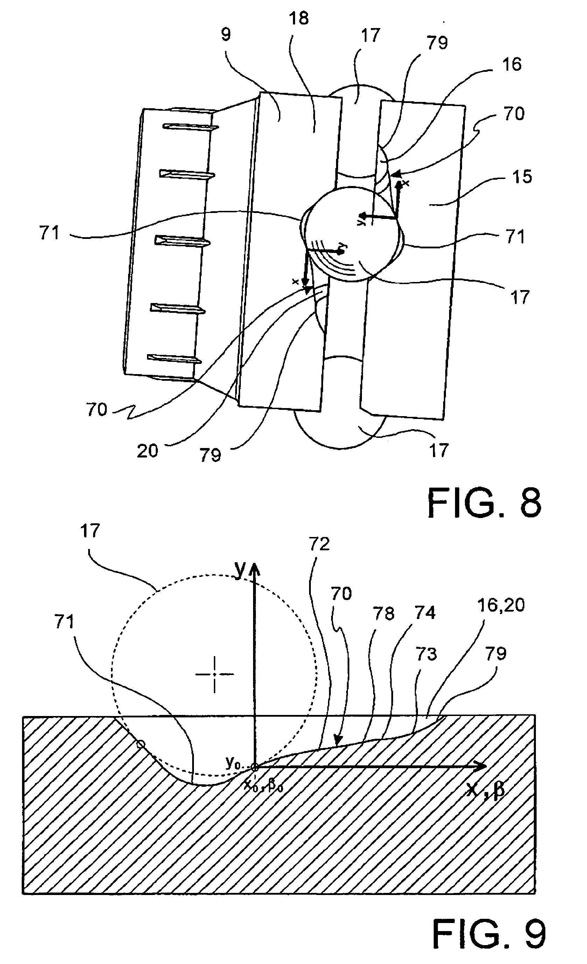

In accordance with an embodiment, the operational zone 70 first profile length 72 has a convex trend (Fig. 9). Preferably, the first profile length 72 has a polynomial trend, still more preferably a cubic trend, where the term "cubic" is to be intended in the meaning of a third order polynomial. An advantageous effect of the above-listed trends of the operational zone 70 first profile length 72 is that they ensure that, for at least one stationary portion 78 of the first profile length 72, as the clamping force $F_s$ increases, the transmitted force $F_L$ increases in a limited manner, or keeps being essentially constant, compared to a considerable increase of the clamping force $F_s$ (stationary length 80 in Fig. 10). In other words, when the rolling bodies 17 roll along such stationary portion 78, the user, by acting, for example, on the hand brake lever, is able to increase the pad clamping force $F_s$ on the brake disc by applying on such hand brake lever a force which increases in a limited manner.

Furthermore, it has been noticed that, while keeping the parking mechanism constant, thanks to the cubic conformation of the operational zone first profile length, it is possible to obtain higher clamping forces $F_s$ compared to those ones which would be obtained with conformations of the first profile length according to the prior art, in particular with rectilinear conformations.

According to a possible embodiment, the operational zone 70 second profile length 73 has an essentially linear trend, having advantageously a higher slope than that of the preferably cubic first profile length 72 of the operational zone 70 at the discontinuity point 74. In this way, once the rolling bodies have passed beyond the discontinuity point 74, the user perceives a transmitted force $F_L$ which increases with substantial continuity from the second value $F_{L2}$ to a final value $F_{Lf,}$ and in this manner he has the perception of the fact that it is not necessary to keep on the parking braking action, in particular the fact that it is not necessary to further act on the hand brake lever.

In accordance with an embodiment, the operational zone 70 first profile length 72 is essentially described by an equation having the following form:

$$y\ (x)\ =\ ax^3+bx^2+cx+d,\ \text{in which:}$$

in which:

- x represents a first coordinate of the operational zone 70 profile starting from a reference initial point $x_0$. The first coordinate x corresponds to the operational zone 70 length which can be travelled starting from such reference initial point $x_0$ by one of the rolling bodies 17 along the rolling path. In mathematical terms, the first coordinate x is defined except for the constant $x_0$;
- y represents a second coordinate of the operational zone 70 profile relative to a reference height ($y_0$). Such second coordinate y corresponds to the operational zone 70 height in the depth direction of the rolling seat (preferably coincident with an axial development direction of the plate) and, consequently, to the lift of one of the rolling bodies 17 in a given point of the rolling path along the operational zone 70. In mathematical terms, the second coordinate y is defined except for the constant $y_0$;
- a, b, c, d are numerical constants.

For a graphic visualization of the meaning of the coordinates x and y, reference is to be made, for example, to the Figures 8 and 9.

In accordance with a possible embodiment, the operational zone 70 second profile length 73 is essentially described by an equation having the following form:

$$y\ (x)\ =\ mx+q,\ \text{in which:}$$

in which:

- x and y have the meanings described above;

- m, q are numerical constants.

Advantageously, the numerical constants a, b, c, d, m, q are selected with numerical values such that the numerical constant m is higher than the first derivative relative to the first coordinate x of the equation $y(x) = ax^3+bx^2+cx+d$ at the discontinuity point 74. The first derivative of a function, in fact, as it is known to those skilled in the art, is just a quantity representative of the slope thereof in a given point. Therefore, if the numerical constant m, equal, as it is known, to the first derivative of the function $y(x) = mx + q$, representative of the operational zone 70 second profile length 73, is higher than the first derivative of the equation $y(x) = ax^3+bx^2+cx+d$, representative of the operational zone 70 first profile length 72, it follows that the second profile length 73 slope is higher than the first profile length 72 slope.

By way of example, possible numerical parameters are now set forth, to be inserted in the above-mentioned equations in order to implement a first profile length 72 and a second profile length 73 of the operational zone 70 according to the present invention.

With reference to the first profile length 72, possible parameters are as follows:

a= 0.00802;
b= 0.08521;
c= 0.42447;
d= 0.

With reference to the second profile length 73, possible parameters are as follows:

m= 0.22069
q= 0.01.

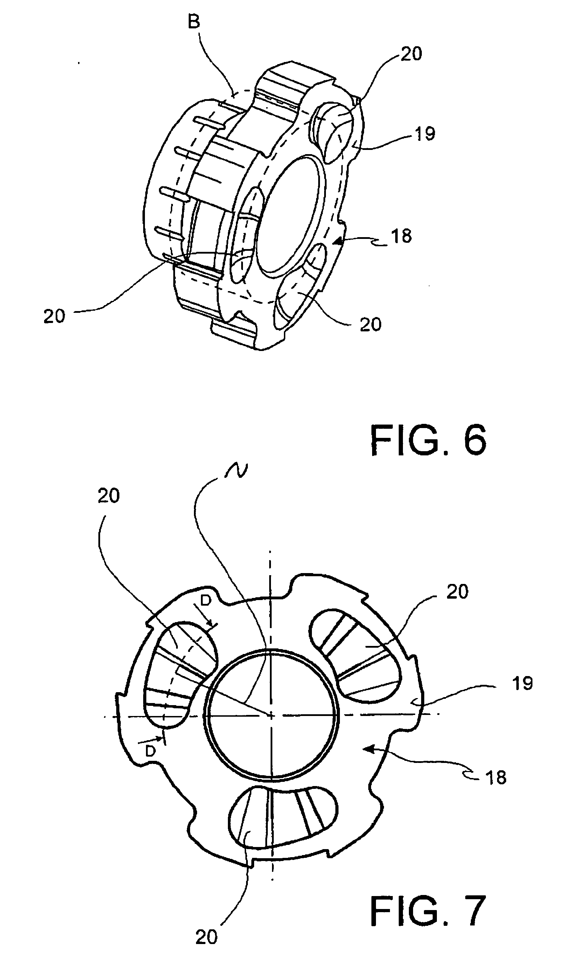

In accordance with an embodiment, the main plate 15 and the reaction plate 18 have discoidal shapes and, advantageously, the rolling paths in the respective rolling seats thereof develop along arcs of circle in the tangential direction to the same plates. Preferably, such arcs of circle along which the rolling paths develop have constant radii of curvature r extending from the respective centres C of the plates (Figures 5 and 7).

From such conformation, it advantageously follows that the first coordinate x of the operational zone 70 of the rolling paths is correlated to a relative rotation angle $\beta$ between the main plate 15 and the reaction plate 18. In particular, in the case where the rolling paths develop along arcs of circle in the tangential direction to the same plates with constant radii of curvature r extending from the respective centres of the plates, as it shall be appreciated by those skilled in the art, the operational zone 70 first coordinate x results to be directly proportional to the relative rotation angle $\beta$ between the main plate 15 and the reaction plate 18. To those skilled in the art, it shall be also understood that if, in accordance with a preferred embodiment, the secondary plate 18 is integrally connected upon rotating to the main support body 6, the relative rotation angle $\beta$ between main plate 15 and reaction plate 18 coincides with the relative rotation angle between main plate 15 and main support body 6, therefore to the relative rotation angle of the actuating lever 11 relative to the main support body 6, since such actuating lever 11 is advantageously integrally connected upon rotating to the main plate 15 through the actuating shaft 14.

Very much similarly to what has been described for the first coordinate x of the operational zone 70 profile, defined except for a constant $x_0$ having the meaning of operational zone reference initial point, also the relative rotation angle $\beta$ between main plate 15 and reaction plate 18 can be defined except for a reference angular position $\beta_0$, correlated, according to what has been stated, to the operational zone reference initial point $x_0$.

In the case where, in accordance with a possible embodiment, in both the main 15 and reaction 18 plates rolling seats 16 and 20 which are corresponding, opposite and adapted to concomitantly receive the same rolling body 17 are provided, such rolling seats 16 and 20 of the respective plates are advantageously shaped so that two diametrically opposite points of the same rolling body 17 concomitantly received in the two rolling seats 16 and 20, during the rolling of the latter therein, for travelled equal lengths of operational zone x along the respective rolling paths, are essentially at the same height y in the respective rolling seats. To this aim, the rolling seats 16 and 20 are advantageously shaped so that:

- the respective pairs of axes x, y of each of the opposite rolling seats 16 and 20 are arranged so that the respective axes y have the respective positive directions facing one another, and the respective axes x are mutually parallel and opposite (in this regard, see Fig. 8);
- the operational zones 70 of such rolling seats have profiles which follow the same law y(x) with reference to the respective pairs of axes x, y arranged according to the described orientation.

In accordance with an embodiment, the profiles of the rolling seats operational portions 70 comprise a third profile length 79 successive to the second profile length 73. Such third profile length 79 has the advantageous function of a limit stop detent for the rolling bodies 17 within the rolling seats, so as to prevent them from coming out of the rolling seats once the main plate 15 and the reaction plate 18 have reached a predetermined maximum relative rotation angle β. Preferably, such third profile length 79 has a concavity adapted to at least partially receive the rolling body 17 at the end of its stroke.

In accordance with an embodiment, the main plate 15 and the reaction plate 18 are made in a sinterized steel.

From the above-provided description, those skilled in the art will be able to appreciate how the presence of the discontinuity point along the profile of the rolling bodies rolling path within the rolling seats causes an abrupt variation of the outwardly transmitted force from the same device upon the passage of the rolling bodies through such discontinuity point. This abrupt variation of the transmitted force is perceivable by the user through the control member which is connectable to the parking device, for example, via the hand brake lever. Thanks to the presence of such discontinuity point, therefore, it is possible to provide the user with a reference about the progression status of the parking braking action. In particular, it is possible to provide the discontinuity point in a point of the rolling path corresponding to the completed clamping condition. In this way the user, by feeling an abrupt variation of the transmitted force, is informed of the fact that the parking braking action has been successfully completed, therefore he can stop the action on the control member without any doubts on the proper carrying out of the parking braking action. Therefore, risks of incomplete parking braking actions, consequently risks of accidental movements of the vehicle subjected to a parking braking action are reduced.

To the embodiments described above of the parking device and the brake caliper according to the invention, those skilled in the art, to the aim of meeting specific, contingent needs, will be able to make a number of alterations, modifications, or replacements of elements with other functionally equivalent ones, without anyhow departing from the scope of the following claims.

**Claims**

1. A parking device (2) of a brake caliper (1) for a vehicle disc brake, comprising:

   - a main support body (6);
   - pushing means (7) adapted to exert a pushing action on at least one pad, so that this engages a brake disc of the disc brake associated to a wheel of said vehicle, clamping it with a clamping force ($F_s$);
   - actuating means (8) adapted to actuate said pushing means (7) so that these exert said pushing action on the pad, said actuating means (8) comprising a main plate (15) and a reaction plate (18) adapted to cooperate with one another, in which at least one between said main plate (15) and said reaction plate (18) comprises one or more rolling seats (16, 20) adapted to at least partially receive rolling bodies (17) and to make them to roll therein along rolling paths, said rolling seats (16, 20) comprising operational zones (70) shaped so that the rolling of the rolling bodies (17) along said rolling paths translates in a relative movement between the main plate (15) and the reaction plate (18) adapted to actuate said pushing means (7),

   wherein said operational zones (70) have profiles comprising a first profile length (72) and a second profile length (73), having in common a discontinuity point (74), in which the first profile length (72) slope is different from the second profile length (73) slope,
   **characterized in that** at said discontinuity point (74), the slope of said operational zone (70) second profile length (73) is higher than the slope of said operational zone (70) first profile length (72), whereby the clamping force upon actuation increases at the discontinuity point.

2. The device (2) according to the preceding claim, wherein:

   - the rolling of the rolling bodies (17) on said first profile length (72) of the operational zone (70) is adapted to implement a clamping step (76) of said brake disc, wherein said clamping force ($F_s$) passes from a first contact value ($F_{s0}$) which is essentially null to a first intermediate clamping value ($F_{s1}$) adapted to implement the parking; and
   - the rolling of the rolling bodies (17) on said second profile length (73) of the operational zone (70) is adapted to implement a completed clamping step (77) of the brake disc, wherein said clamping force ($F_s$) can pass from said first intermediate clamping value ($F_{s1}$) to a further clamping value ($F_{sf}$).

3. The device (2) according to claim 1, wherein at said discontinuity point (74), the difference between the slope of the operational zone (70) second profile length (73) and the slope of the operational zone (70) first profile length (72) is about 5°.

4. The device (2) according to any one of the preceding claims, wherein the profile of said operational zone (70) first profile length (72) has a convex trend.

5. The device (2) according to any one of the preceding claims, wherein the profile of said operational zone (70) first profile length (72) has a polynomial trend.

6. The device (2) according to any one of the preceding claims, wherein the profile of said operational zone (70) first profile length (72) has a cubic trend.

7. The device (2) according to any one of the preceding claims, wherein the profile of said operational zone (70) second profile length (73) has an essentially linear trend.

8. The device (2) according to any one of the preceding claims, wherein the profile of said operational zone (70) first profile length (72) is essentially described by an equation having the following form:

$$y(x) = ax^3 + bx^2 + cx + d,$$

wherein:

- x represents a first coordinate of the operational zone (70) profile starting from a reference initial point ($x_0$), said first coordinate (x) corresponding to the operational zone length (70) which can be travelled starting from said reference initial point ($x_0$) by one of said rolling bodies (17);
- y represents a second coordinate of the operational zone (70) profile relative to a reference height ($y_0$), said second coordinate (y) corresponding to said operational zone (70) height;
- a, b, c, d are numerical constants.

9. The device (2) according to any one of the preceding claims, wherein the profile of said operational zone (70) second profile length (73) is essentially described by an equation having the following form:

$$y(x) = mx + q,$$

wherein:

- x represents a first coordinate of the operational zone (70) profile starting from an operational zone reference initial point ($x_0$), said first coordinate (x) corresponding to the operational zone length (70) which can be travelled starting from said reference initial point ($x_0$) by one of said rolling bodies (17);
- y represents a second coordinate of the operational zone (70) profile relative to a reference height ($y_0$), said second coordinate (y) corresponding to said operational zone (70) height;
- m, q are numerical constants.

10. The device (2) according to the claims 8 and 9, wherein said numerical constants a, b, c, d, m, q are such that the numerical constant m is higher than the first derivative relative to the first coordinate (x) of the operational zone (70) profile of the equation $y(x) = ax^3 + bx^2 + cx + d$ at said discontinuity point (74).

11. The device (2) according to the claims 8 and 9 or according to claim 10, wherein said parameters a, b, c, d, have the following values:

a= 0.00802;
b= 0.08521;
c= 0.42447;
d= 0,

and wherein said parameters m and q have the following values:

m= 0.22069
q= 0.01.

12. The device (2) according to any one of the preceding claims, wherein said operational portions (70) profiles comprise a third profile length (79) adjacent said second profile length (73), said third profile length (79) being adapted to stop the rolling of said rolling bodies (17) within said rolling seats (16, 20) thus preventing them from coming out of the latter.

13. The device (2) according to any one of the preceding claims, wherein said rolling seats (16, 20) comprise a rest zone (71) distinct from said operational zone (70) adapted to house the rolling bodies (17) when the parking braking action is inactive.

14. Brake caliper (1) comprising a parking device (2) according to any one of the preceding claims.


**Patentansprüche**

1. Parkvorrichtung (2) eines Bremssattels (1) für eine Fahrzeugscheibenbremse, umfassend:

- einen Haupttragekörper (6);
- Drückmittel (7), welche dazu eingerichtet sind, eine Drückwirkung auf wenigstens einen Belag auszuüben, so dass dieser mit einer Bremsscheibe der Scheibenbremse in Eingriff tritt, welche einem Rad des Fahrzeugs zugeordnet ist, wodurch sie mit einer Klemmkraft ($F_s$) eingeklemmt wird;
- Betätigungsmittel (8), welche dazu eingerichtet sind, die Drückmittel (7) zu betätigen, so dass diese die Drückwirkung auf den Belag ausüben, wobei die Betätigungsmittel (8) eine Hauptplatte (15) und eine Reaktionsplatte (18) umfassen, welche dazu eingerichtet sind, miteinander zusammenzuwirken, wobei wenigstens eine von der Hauptplatte (15) und der Reaktionsplatte (18) einen oder mehrere Rollsitze (16, 20) umfasst, welche dazu eingerichtet sind, Rollkörper (17) wenigstens teilweise aufzunehmen und zu bewirken, dass diese entlang von Rollpfaden darin rollen, wobei die Rollsitze (16, 20) Betriebsbereiche (70) umfassen, welche derart geformt sind, dass das Rollen der Rollkörper (17) entlang der Rollpfade in eine relative Bewegung zwischen der Hauptplatte (15) und der Reaktionsplatte (18) übersetzt wird, welche dazu eingerichtet ist, die Drückmittel (7) zu betätigen,

wobei die Betriebsbereiche (70) Profile aufweisen, welche eine erste Profillänge (72) und eine zweite Profillänge (73) umfassen, welche einen gemeinsamen Diskontinuitätspunkt (74) aufweisen, an welchem die Steigung der ersten Profillänge (72) verschieden von der Steigung der zweiten Profillänge (73) ist, **dadurch gekennzeichnet, dass** an dem Diskontinuitätspunkt (74) die Steigung der zweiten Profillänge (73) des Betriebsbereichs (70) größer ist als die Steigung der ersten Profillänge (72) des Betriebsbereichs (70), wobei die Klemmkraft auf eine Betätigung hin an dem Diskontinuitätspunkt zunimmt.

2. Vorrichtung (2) nach dem vorhergehenden Anspruch, wobei:

- das Rollen der Rollkörper (17) an der ersten Profillänge (72) des Betriebsbereichs (70) dazu eingerichtet ist, eine Klemmstufe (76) der Scheibenbremse zu realisieren, wobei die Klemmkraft ($F_s$) von einem ersten Kontaktwert ($F_{s0}$), welcher im Wesentlichen Null ist, in einen ersten Zwischenklemmwert ($F_{s1}$) übergeht, welcher dazu eingerichtet ist, das Parken zu realisieren; und
- das Rollen der Rollkörper (17) an der zweiten Profillänge (73) des Betriebsbereichs (70) dazu eingerichtet ist, eine vollständige Klemmstufe (77) der Bremsscheibe zu realisieren, wobei die Klemmkraft ($F_s$) von dem ersten Zwischenklemmwert ($F_{s1}$) in einen weiteren Klemmwert ($F_{sf}$) übergehen kann.

3. Vorrichtung (2) nach Anspruch 1,
wobei die Differenz zwischen der Steigung der zweiten Profillänge (73) des Betriebsbereichs (70) und der Steigung der ersten Profillänge (72) des Betriebsbereichs (70) an dem Diskontinuitätspunkt (74) ungefähr 5° beträgt.

4. Vorrichtung (2) nach einem der vorhergehenden Ansprüche,
wobei das Profil der ersten Profillänge (72) des Betriebsbereichs (70) einen konvexen Verlauf aufweist.

**5.** Vorrichtung (2) nach einem der vorhergehenden Ansprüche,
wobei das Profil der ersten Profillänge (72) des Betriebsbereichs (70) einen polynomischen Verlauf aufweist.

**6.** Vorrichtung (2) nach einem der vorhergehenden Ansprüche,
wobei das Profil der ersten Profillänge (72) des Betriebsbereichs (70) einen kubischen Verlauf aufweist.

**7.** Vorrichtung (2) nach einem der vorhergehenden Ansprüche,
wobei das Profil der zweiten Profillänge (73) des Betriebsbereichs (70) einen im Wesentlichen linearen Verlauf aufweist.

**8.** Vorrichtung (2) nach einem der vorhergehenden Ansprüche,
wobei das Profil der ersten Profillänge (72) des Betriebsbereichs (70) im Wesentlichen durch eine Gleichung beschrieben wird, welche die folgende Form aufweist:

$$y(x) = ax^3+bx^2+cx+d,$$

wobei:

- x eine erste Koordinate des Profils des Betriebsbereichs (70) ausgehend von einem Referenz-Anfangspunkt $(x_0)$ darstellt, wobei die erste Koordinate (x) der Länge des Betriebsbereichs (70) entspricht, welche ausgehend von dem Referenz-Anfangspunkt $(x_0)$ von einem der Rollkörper (17) befahrbar ist;
- y eine zweite Koordinate des Profils des Betriebsbereichs (70) relativ zu einer Referenzhöhe $(y_0)$ darstellt, wobei die zweite Koordinate (y) der Höhe des Betriebsbereichs (70) entspricht;
- a, b, c, d numerische Konstanten sind.

**9.** Vorrichtung (2) nach einem der vorhergehenden Ansprüche,
wobei das Profil der zweiten Profillänge (73) des Betriebsbereichs (70) im Wesentlichen durch eine Gleichung beschrieben wird, welche die folgende Form aufweist:

$$y(x) = mx+q,$$

wobei:

- x eine erste Koordinate des Profils des Betriebsbereichs (70) ausgehend von einem Referenz-Anfangspunkt (xo) des Betriebsbereichs darstellt, wobei die erste Koordinate (x) der Länge des Betriebsbereichs (70) entspricht, welche ausgehend von dem Referenz-Anfangspunkt $(x_0)$ von einem der Rollkörper (17) befahrbar ist;
- y eine zweite Koordinate des Profils des Betriebsbereichs (70) relativ zu einer Referenzhöhe $(y_0)$ darstellt, wobei die zweite Koordinate (y) der Höhe des Betriebsbereichs (70) entspricht;
- m, q numerische Konstanten sind.

**10.** Vorrichtung (2) nach Anspruch 8 und 9,
wobei die numerischen Konstanten a, b, c, d, m, q derart sind, dass die numerische Konstante m größer als die erste Ableitung nach der ersten Koordinate (x) des Profils des Betriebsbereichs (70) der Gleichung $y(x) = ax^3+bx^2+cx+d$ an dem Diskontinuitätspunkt (74) ist.

**11.** Vorrichtung (2) nach Anspruch 8 und 9 oder nach Anspruch 10, wobei die Parameter a, b, c, d die folgenden Werte aufweisen:

a = 0,00802;
b = 0,08521;
c = 0,42447;
d = 0,

und wobei die Parameter m und q die folgenden Werte aufweisen:

m = 0,22069;
q = 0,01.

12. Vorrichtung (2) nach einem der vorhergehenden Ansprüche,
wobei die Profile der Betriebsabschnitte (70) eine der zweiten Profillänge (73) benachbarte dritte Profillänge (79) umfassen, wobei die dritte Profillänge (79) dazu eingerichtet ist, das Rollen der Rollkörper (17) innerhalb der Rollsitze (16, 20) anzuhalten, um zu verhindern, dass diese aus den Letzteren austreten.

13. Vorrichtung (2) nach einem der vorhergehenden Ansprüche,
wobei die Rollsitze (16, 20) einen von dem Betriebsbereich (70) verschiedenen Ruhebereich (71) umfassen, welcher dazu eingerichtet ist, die Rollkörper (17) aufzunehmen, wenn die Parkbremswirkung inaktiv ist.

14. Bremssattel (1), umfassend eine Parkvorrichtung (2) nach einem der vorhergehenden Ansprüche.

**Revendications**

1. Dispositif de stationnement (2) d'un étrier de frein (1) pour un frein à disque de véhicule, comprenant :

- un accord support principal (6) ;
- des moyens de poussée (7) adaptés à exercer une action de poussée sur au moins un patin, de sorte que celui-ci engage un disque de frein du frein à disque associé à une roue dudit véhicule, en le serrant avec une force de serrage (Fs) ;
- des moyens d'actionnement (8) adaptés à actionner lesdits moyens de poussée (7) de sorte que ceux-ci exercent ladite action de poussée sur le patin, lesdits moyens d'actionnement (8) comprenant une plaque principale (15) et une plaque de réaction (18) adaptées à coopérer l'une avec l'autre, dans lesquelles l'une au moins entre ladite plaque principale (15) et ladite plaque de réaction (18) comprend un ou plusieurs sièges à roulement (16, 20) adaptés à recevoir au moins partiellement des corps de roulement (17) et à les amener à rouler dans ces sièges le long de trajet de roulement, lesdits sièges à roulement (16, 20) comprenant des zones fonctionnelles (70) formées de telle façon que le roulement des corps de roulement (17) le long desdits trajets de roulement se traduit par un mouvement relatif entre la plaque principale (15) et la plaque de réaction (18) adapté à actionner lesdits moyens de pousser (7),

dans lequel lesdites zones fonctionnelles (70) ont des profils comprenant une première longueur de profil (72) et une seconde longueur de profil (73), ayant en commun un point de discontinuité (74), dans lesquelles la pente de la première longueur de profil (72) est différente de la pente de la seconde longueur de profil (73), **caractérisé en ce que**, audit point de discontinuité (74), la pente de ladite seconde longueur de profil (73) de ladite zone fonctionnelle (70) est plus élevée que la pente de ladite première longueur de profil (72) de ladite zone fonctionnelle (70), suite à quoi la force de serrage, lors de l'actionnement, augmente au niveau du point de discontinuité.

2. Dispositif (2) selon la revendication précédente, dans lequel :

le roulement des corps de roulement (17) sur ladite première longueur de profil (72) de la zone fonctionnelle (70) est adapté à mettre en oeuvre une étape de serrage (76) dudit disque de freins, telle que ladite force de serrage (Fs) passe depuis une première valeur de contact ($Fs_0$) qui est essentiellement nulle à une première valeur de serrage intermédiaire ($s_1$) adaptée à mettre en oeuvre le stationnement ; et

- le roulement des corps de roulement (17) sur ladite seconde longueur de profil (73) de la zone fonctionnelle (70) est adapté à mettre en oeuvre une étape de serrage complète (77) du disque de frein, de sorte que ladite force de serrage (Fs) peut passer depuis ladite première valeur de serrage intermédiaire ($s_1$) à une autre valeur de serrage (Fsf).

3. Dispositif (2) selon la revendication 1, dans lequel, au niveau dudit point de discontinuité (74), la différence entre la pente de la seconde longueur de profil (73) de la zone fonctionnelle (70) et la pente de la première longueur de profil (72) de la zone fonctionnelle (70) est environ 5°.

4. Dispositif (2) selon l'une quelconque des revendications précédentes, dans lequel le profil de ladite première longueur de profil (72) de ladite zone fonctionnelle (70) a une tendance convexe.

5. Dispositif (2) selon l'une quelconque des revendications précédentes, dans lequel le profil de ladite première longueur de profil (72) de ladite zone fonctionnelle (70) a une tendance polynomiale.

6. Dispositif (2) selon l'une quelconque des revendications précédentes, dans lequel le profil de ladite première longueur de profil (72) de ladite zone fonctionnelle (70) a une tendance cubique.

7. Dispositif (2) selon l'une quelconque des revendications précédentes, dans lequel le profil de ladite seconde longueur de profil (73) de ladite zone fonctionnelle (70) a une tendance est essentiellement linéaire.

8. Dispositif (2) selon l'une quelconque des revendications précédentes, dans lequel le profil de ladite première longueur de profil (72) de ladite zone fonctionnelle (70) est essentiellement décrit par une équation ayant la forme suivante :

$$y(x) = ax3 + bx2 + cx + d,$$

dans laquelle :

- x représente une première coordonnée du profil de la zone fonctionnelle (70) partant depuis un point initial de référence $(x_0)$, ladite première coordonnée (x) correspondant à la longueur de zone fonctionnelle (70) qui peut être parcourue en partant depuis ledit point initial de référence $(x_0)$ par l'un desdits corps de roulement (17) ;
- y représente une seconde coordonnée du profil de la zone fonctionnelle (70) par rapport à une hauteur de référence $(y_0)$, ladite seconde coordonnée (y) correspondant à la hauteur de ladite zone fonctionnelle (70) ;
- a, b, c, d sont des constantes numériques.

9. Dispositif (2) selon l'une quelconque des revendications précédentes, dans lequel le profil de ladite seconde longueur de profil (73) de ladite zone fonctionnelle (70) est essentiellement décrit par une équation ayant la forme suivante :

$$y(x) = mx + q,$$

dans laquelle :

- x représente une première coordonnée du profil de la zone fonctionnelle (70) en partant d'un point initial de référence $(x_0)$ de la zone fonctionnelle, ladite première coordonnée (x) correspondant à la longueur (70) de la zone fonctionnelle qui peut être parcourue en partant dudit point initial de référence $(x_0)$ par l'un desdits corps de roulement (17) ;
- y représente une seconde coordonnée du profil de la zone fonctionnelle (70) par rapport à une hauteur de référence $(y_0)$, ladite seconde coordonnée (y) correspondant à la hauteur de ladite zone fonctionnelle (70) ;
- m, q sont des constantes numériques.

10. Dispositif (2) selon les revendications 8 et 9, dans lequel lesdites constantes numériques a, b, c, d, m, q sont telles que la constante numérique m est plus grande que la première dérivée par rapport à la première coordonnée (x) du profil de la zone fonctionnelle (70) de l'équation $y(x) = ax^3 + bx^2 + cx + d$ au niveau dudit point de discontinuité (74).

11. Dispositif (2) selon les revendications 8 et 9 ou selon la revendication 10, dans lequel lesdits paramètres a, b, c, d ont les valeurs suivantes :

a = 0,00802 ;
b = 0,08521 ;
c = 0,42447 ;
d=0,

et dans lequel lesdits paramètres m et q ont les valeurs suivantes :

m = 0,22069 ;

q = 0,01.

**12.** Dispositif (2) selon l'une quelconque des revendications précédentes, dans lequel lesdits profils des portions fonctionnelles (70) comprennent une troisième longueur de profil (79) adjacente à ladite seconde longueur de profil (73), ladite troisième longueur de profil (79) étant adaptée à arrêter le roulement desdits corps de roulement (17) dans lesdits sièges à roulement (16, 20), en les empêchant ainsi de sortir de ces derniers.

**13.** Dispositif (2) selon l'une quelconque des revendications précédentes, dans lequel lesdits sièges à roulement (16, 20) comprennent une zone de repos (71) distincte de ladite zone fonctionnelle (70) et adaptée à abriter les corps de roulement (17) quand l'action de freinage de stationnement est inactive.

**14.** Étrier de frein (1) comprenant un dispositif de stationnement (2) selon l'une quelconque des revendications précédentes.

FIG. 1

EP 2 359 022 B1

FIG.2

FIG. 3

## FIG. 4

## FIG. 5

## FIG. 6

## FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3146818
- DE 102006012440
- US 20070105684 A
- EP 2093450 A